Europäisches Patentamt

European Patent Office

Office européen des brevets

(11) Publication number: **0 306 243**
**A2**

# (12) EUROPEAN PATENT APPLICATION

(21) Application number: **88307963.4**

(22) Date of filing: **26.08.88**

(51) Int. Cl.⁴: **G02B 6/26**

(30) Priority: **04.09.87 JP 221485/87**

(43) Date of publication of application:
**08.03.89 Bulletin 89/10**

(84) Designated Contracting States:
**CH DE FR GB LI**

(71) Applicant: **SEIKO INSTRUMENTS INC.**
**31-1, Kameido 6-chome Koto-ku**
**Tokyo 136(JP)**

(72) Inventor: **Iwakiri, Toyokazu**
**c/o Seiko Instruments Inc. 31-1, Kameido,**
**6-chome**
**Koto-ku Tokyo(JP)**
Inventor: **Kashima, Yoshio**
**c/o Seiko Instruments Inc. 31-1, Kameido,**
**6-chome**
**Koto-ku Tokyo(JP)**
Inventor: **Sugiyama, Akira**
**c/o Seiko instruments Inc. 31-1, Kameido,**
**6-chome**
**Koto-ku Tokyo(JP)**
Inventor: **Betsui, Ikuo**
**c/o Seiko Instruments Inc. 31-1, Kameido,**
**6-chome**
**Koto-ku Tokyo(JP)**
Inventor: **Suzuki, Nobuo**
**c/o Seiko Instruments Inc. 31-1, Kameido,**
**6-chome**
**Koto-ku Tokyo(JP)**

(74) Representative: **Miller, Joseph et al**
**J. MILLER & CO. Lincoln House 296-302 High**
**Holborn**
**London WC1V 7JH(GB)**

(54) **Optical attenuator.**

(57) An optical attenuator comprising first and second coaxial optical fibres (2,3) which are optically coupled to each other with a gap ($\ell$) between their adjacent end faces (22,31) characterised in that each of the adjacent end faces (22,31) is disposed obliquely to the axis of the optical fibres (2,3).

*F I G.1*

## OPTICAL ATTENUATOR

This invention relates to an optical attenuator, e.g. for adjusting the optical power which is incident on a detector in an optical fibre transmission.

An optical attenuator is disclosed in the Transactions of the IE/ICE,Symposium No. 2302, 1982 which comprises first and second coaxial optical fibres which are optically coupled to each other with an air gap between their adjacent end faces. These end faces, however, are normal to the axis of the optical fibres so that there is multiple reflection therebetween, and thus where light with high coherence, such as that from a laser diode (hereinafter called LD) or the like, is incident on the fibres, a change in attenuation may arise due to a temperature change or other cause. Moreover, since the light reflected from the adjacent end faces returns to the light source, it is hard to use such an optical attenuator in a system in which such reflected light may be a problem.

According, therefore, to the present invention, there is provided an optical attenuator comprising first and second coaxial optical fibres which are optically coupled to each other with a gap between their adjacent end faces characterised in that each of the adjacent end faces is disposed obliquely to the axis of the optical fibres.

Preferably, each of the optical fibres, at its end remote from its said adjacent end face, is provided with a part-spherical end face.

Preferably, at least one of the adjacent end faces has an anti-reflection coating thereon.

Preferably, each of the said end faces is polished.

The invention is illustrated, merely by way of example, in the accompanying drawings, in which:-

Figure 1 is a sectional view of a first embodiment of an optical attenuator according to the present invention;

Figure 2 is an enlarged view of a part of a second embodiment of an optical attenuator according to the present invention,

Figure 3 is a perspective view of a fibre-connector which may be connected to an optical attenuator according to the present invention;

Figure 4 is a perspective view showing an optical attenuator according to the present invention which is connected to the fibre connector shown in Figure 3;

Figure 5 is a sectional view showing a third embodiment of an optical attenuator according to the present invention, and

Figure 6 is a schematic drawing of a prior art optical attenuator.

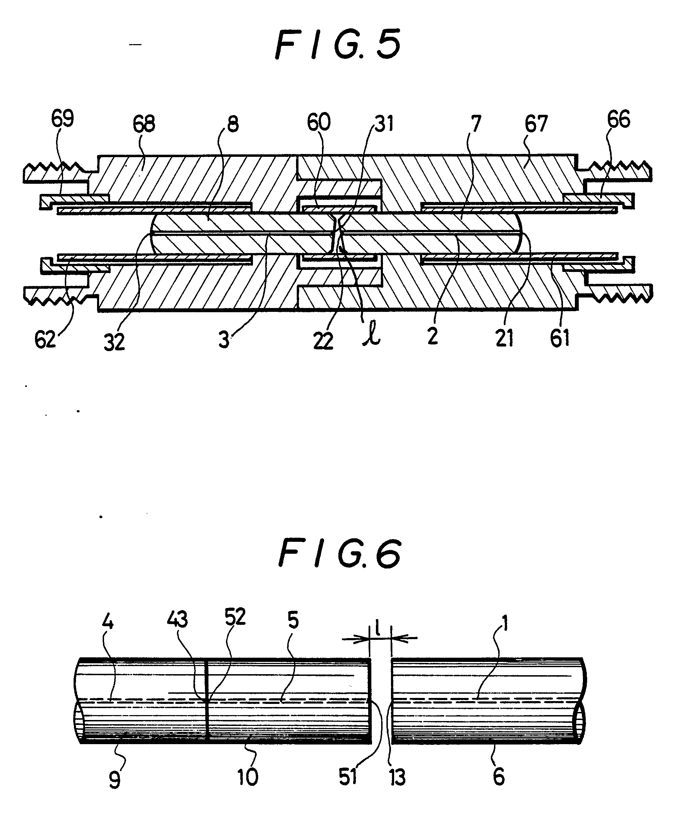

In Figure 6 there is shown a prior art optical attenuator. The attenuator comprises a first or incident fibre 1, an output fibre 4, and a second optical fibre 5. Ferrules, or cladding,6, 9 and 10 is provided for holding the fibres 1, 4 and 5 respectively. An end face 13 of the incident fibre 1 and an end face 51 of the fibre 5 are disposed adjacent to each other and are spaced apart by an air gap $l$. The fibres 4, 5 also have end faces 43, 52 which abut each other.

The light propagated through the incident fibre 1 is emitted into the air gap $l$ from the end face 13. A part of the light emitted into the air gap $l$ is incident on the optical fibre 5 from the end face 51 and is then incident on the fibre 4 by way of the end faces 52 and 43, and so is propagated. The attenuation in this case is determined by the size of the air gap $l$ between the end faces 13 and 51. Such an attenuator is disclosed in the Transactions of the IE/ICE, Symposium No. 2302, 1982.

However, the prior art optical attenuator shown in Figure 6 has the following two defects.

That is to say, since the fibre end faces 13 and 51 are opposite to and parallel to each other and are disposed on opposite sides of the air gap $l$, the two end faces 13 and 51 constitute a Fabry-Perot interferometer in which there is multiple reflection therebetween. Consequently, where light with high coherence, such as that from a laser diode (hereinafter called LD) or the like, is incident on the fibres, a change in attenuation may arise due to a temperature change or other cause. Moreover, since the light reflected from the adjacent end faces 13, 51 returns to the light source, the optical attenuator is difficult to use in a system (using an LD for example) in which the influence of the reflected light may be a problem.

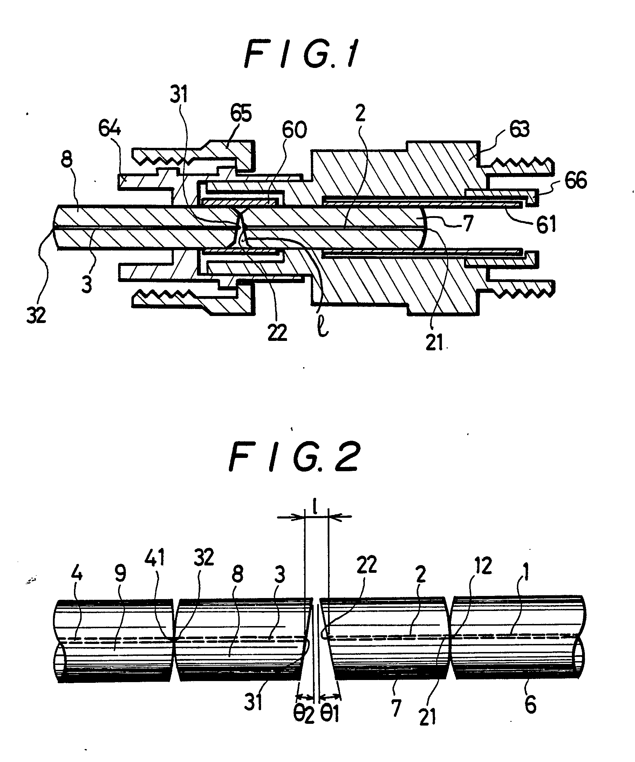

In Figure 1 there is therefore shown a first embodiment of an optical attenuator according to the present invention. The optical attenuator of Figure 1 comprises an incident side or first fibre 2, and an outgoing side or second fibre 3. Ferrules or cladding 7, 8 is provided for holding the fibres 2 and 3 respectively.

An incident side end face 21 of the incident side fibre 2 is polished so as to have a part-spherical surface. An outgoing side and face 22 of the incident side fibre 2 is polished so as to have a surface oblique to the axis of the incident side fibre 2,the latter being coaxial with the fibre 3. An incident side end face 31 of the outgoing side fibre 3, which is adjacent to the end face 22 is polished so as to have a surface oblique to the axis of the outgoing side fibre 3. An outgoing side end face 32 of the outgoing side fibre 3 is polished so as to have a part-spherical surface. A holding member 60 (like a slit sleeve, for example) is provided for holding the ferrules 7 and 8 together and thus keeping the incident side fibre 2 and the outgoing side fibre 3 coaxial. A holding member 61 (like a slit sleeve for example) is provided for holding together the ferrule 7 and a ferrule (not shown) corresponding to a ferrule 6 illustrated in Figure 2, and thus keeping together the incident side fibre 2 and an incident fibre (not shown) corresponding to the incident fibre 1 illustrated in Figure 2 so that they are coaxial. Members 63, 64, 65 are provided for holding the above-mentioned parts together and for fastening them to a plug and an adapter (not shown). A member 66 is provided for preventing the holding member 61 from coming off.

Figure 2 shows part of an optical attenuator which is generally similar to that of Figure 1 but which, unlike the latter, does not have chamfered ends of the surfaces 22, 31.

The optical attenuator of Figure 2 thus comprises an incident fibre 1, an outgoing fibre 4, and ferrules 6, 9 for holding the fibres 1 and 4 respectively. End faces 12, 41 of the incident fibre 1 and the outgoing fibre 4 respectively are polished so as to have part-spherical surfaces. Like reference numerals represent like parts in Figures 1 and 2.

The light propagated through the incident fibre 1 is incident on the incident side fibre 2 by way of the fibre end faces 12 and 21 which are polished so as to be part-spherical, and is then emitted into the air gap $l$ from the outgoing side end face 22 of the incident side fibre 2 which is polished so as to be oblique to the axis of the incident side fibre 2. A part of the light transmitted to the air gap $l$ is incident on the outgoing side fibre 3 from the incident side end face 31 of the outgoing side fibre 3 which is polished so as to be oblique to the axis of the fibre 3, passes through the fibre end faces 32 and 41 which are polished so as to be part-spherical, and is incident on the outgoing fibre 4 and propagated.

In this case, the attenuation is determined by the size of the air gap $l$ between the outgoing side end face 22 of the incident side fibre 2 and the incident side end face 31 of the outgoing side fibre 3, the angle $(90° - \theta_1)$ formed between the axis of the incident side fibre 2 and the outgoing side end face 22 of the incident side fibre 2, and the angle $(90° - \theta_2)$ formed between the axis of the outgoing side fibre 3 and the incident side end face 31 of the outgoing side fibre 3. The greater the value of $l$, $\theta_1$, $\theta_2$, the larger is the attenuation achieved.

Since the outgoing side end face 22 of the incident side fibre 2 and the incident side end face 31 of the outgoing side fibre 3 are not parallel to each other, the end faces 22, 31 do not form a Fabry-Perot interferometer. Accordingly, multiple reflection will not arise between the outgoing side end face 22 of the incident side fibre 2 and the incident side end face 31 of the outgoing side 3. Further, since the outgoing side end face 22 of the incident side fibre 2 and the incident side end face 31 of the outgoing side fibre 3 are inclined to the axis of the incident side fibre 2 and the axis of the outgoing side fibre 3 respectively, the light of the Fresnel reflection at the outgoing side end face 22 of the incident side fibre 2 and the incident side end face 31 of the outgoing side fibre 3 cannot be propagated through the optical fibre. Thus, reflections at the junction of the incident fibre 1 and the incident side fibre 2 of the optical attenuator, and also at the junction of the outgoing side fibre 3 of the optical attenuator and the outgoing fibre 4 are minimized as each end face is polished so as to be part-spherical.

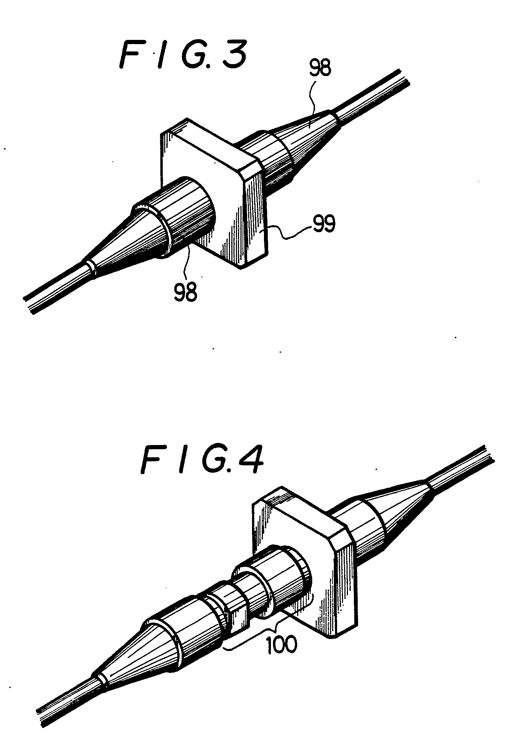

Figure 3 is a perspective view of a fibre connector, Figure 3 showing the construction before the optical attenuator of the present invention is connected thereto. The fibre connector comprises a plug 98 and an adapter 99. Figure 4 is a perspective view showing an optical attenuator 100 according to the present invention connected to the fibre connector of Figure 3.

Figure 5 shows another embodiment of the present invention. The Figure 5 construction is provided with members 67, 68 for holding the ferrules 7 and 8 together and for fastening them to a fibre plug (not shown). A holding member 62 (like a slit sleeve, for example) is provided for holding together the ferrule 8 and the ferrule 9 shown in Figure 2, and thus for keeping coaxial the outgoing side fibre 3 and the outgoing fibre 4 illustrated in Figure 2. A member 69 is provided for preventing the holding member 62 from coming off. Like reference numerals represent like parts in Figures 1 and 5.

In the embodiments described above, the adjacent end faces of the coupled fibres are polished and are oblique to the axis of the optical fibres, the adjacent end faces being disposed opposite each other to maintain a prescribed gap which is effective in preventing a situation in which the adjacent end faces can work as a Fabry-Perot interferometer, in which situation reflected light from the adjacent end faces will not be propagated through the optical fibres.

In Figure 1, Figure 2 and Figure 5, an anti-reflection coating (AR coating) (not shown) formed by evaporation on the outgoing side end face 22 of the incident side fibre 2 and on the incident side end face 31 of the outgoing side fibre 3 is effective in further decreasing the reflected light and multiple reflection between the outgoing side end face 22 of the incident side fibre 2 and the incident side end face 31 of the outgoing side fibre 3.

The above description refers to the case where light is incident from the incident fibre 1. However, if light is incident from the outgoing fibre 4, the attenuation remains exactly the same.

An optical attenuator as described above thus does not cause an increase in reflected light or a degradation of optical signals due to multiple reflection of the light. It is therefore applicable to a single mode fibre, and, moreover, is cheap.

## Claims

1. An optical attenuator comprising first and second coaxial optical fibres (2,3) which are optically coupled to each other with a gap (ℓ) between their adjacent end faces (22,31) characterised in that each of the adjacent end faces (22,31) is disposed obliquely to the axis of the optical fibres (2,3).

2. An optical attenuator as claimed in claim 1 characterised in that each of the optical fibres (2,3), at its end remote from its said adjacent end face (22,31), is provided with a part-spherical end face (21,32).

3. An optical attenuator as claimed in claim 1 or 2 characterised in that at least one of the adjacent end faces (22,31) has an anti-reflection coating thereon.

4. An optical attenuator as claimed in any preceding claim characterised in that each of the said end faces (21,22,31,32) is polished.

# F I G. 1

# F I G. 2

F I G. 3

98

99

98

F I G. 4

100

# F I G. 5

69  68  8  60  31  7  67  66

62  32  3  22  $l$  2  21  61

# F I G. 6

4  43  52  5  $l$  1

9  10  51  13  6